# FASCICULE DE BREVET EUROPEEN

(11) **EP 2 303 656 B1**
(45) Date de publication et mention de la délivrance du brevet: **27.03.2013**
(21) Numéro de dépôt: 09797469.5
(22) Date de dépôt: 08.07.2009
(51) Int. Cl.: B60T 13/16, B60T 13/74

(54) **SERVOMOTEUR HYDRAULIQUE D'ASSISTANCE AU FREINAGE COMPORTANT UN MOTEUR**
HYDRAULISCHE SERVOBREMSE MIT MOTOR
BRAKING ASSISTANCE HYDRAULIC SERVOMOTOR INCLUDING A MOTOR

(30) Priorité: 17.07.2008 FR 0804080
(43) Date de publication de la demande: 06.04.2011
(73) Titulaire: Robert Bosch GmbH, 70442 Stuttgart (DE)
(72) Inventeur: SPROCQ, Raynald, F-77450 Esbly (FR); ANDERSON, Chris, F-75002 Paris (FR); CAGNAC, Bastien, F-60500 Chantilly (FR)
(86) Numéro de dépôt international: PCT/EP2009/058687
(87) Numéro de publication internationale: WO 2010/006978

(56) Documents cités:
- EP-A- 0 072 745
- DE-A1- 3 209 337
- DE-A1- 3 502 474
- DE-A1- 3 906 411
- DE-A1- 4 338 906

## Description

La présente invention se rapporte principalement à un servomoteur hydraulique d'assistance au freinage comportant un moteur de préférence un moteur électrique.

Il est connu de réaliser des servomoteurs hydrauliques d'assistance au freinage (appelés hydroboost en terminologie anglo saxonne) alimentés en fluide hydraulique sous pression à partir d'une pompe hydraulique d'un dispositif d'assistance de direction ou d'un maître-cylindre poussé par un servomoteur hydraulique d'assistance au freinage tel que décrit par exemple dans FR 2 727370.

Les servomoteurs hydrauliques alimentés par la pompe d'assistance de direction ont un très mauvais rendement énergétique dans la mesure où ils sont insérés dans le circuit hydraulique de ladite pompe avec circulation continue et une montée en pression obtenue par une interruption de cette circulation lors de l'appui sur une pédale de frein. De plus, des freinages simultanés avec la rotation du volant diminuent l'efficacité de l'assistance de direction ce qui n'est pas satisfaisant pour l'utilisateur. Le servomoteur décrit dans FR 2 727370 nécessite la mise en oeuvre d'une source de vide non nécessairement disponible sur véhicules modernes, notamment les véhicules diesel. De plus, un servomoteur pneumatique présente un encombrement important. En outre, le servomoteur hydraulique est limité par la saturation, la puissance et la course du servomoteur pneumatique.

D'autres servomoteurs hydrauliques sont décrits dans DE 32 09 337, DE 43 38 906, DE 39 06 411, DE 35 02 474 ou EP 0 072745.

Les inconvénients des servomoteurs hydrauliques de type connu sont évités par le servomoteur selon la présente invention comportant une chambre de poussée alimentée, sur commande, par une source de liquide hydraulique, avantageusement de liquide de frein, pressurisé par une source dont les moyens de compression, sont entraînés, sur commande, par un moteur avantageusement électrique. Ainsi, la source du fluide hydraulique sous pression ne débite que lorsqu'il est nécessaire d'alimenter la chambre de poussée, diminuant la consommation énergétique et l'encombrement du dispositif. De plus, un tel dispositif permet de fournir les volumes et/ou les pressions nécessaires au fonctionnement rapide et efficace d'un système de freinage moderne.

L'invention a principalement pour objet un servomoteur hydraulique d'assistance de freinage comportant une chambre de poussée recevant, sur commande un fluide hydraulique sous pression entraînant un piston hydraulique entraînant un piston d'un maître-cylindre caractérisé en ce qu'il comporte une source de liquide hydraulique sous pression muni d'un moteur électrique entraînant un dispositif de pressurisation du fluide hydraulique.

L'invention a également pour objet un servomoteur caractérisé en ce qu'il comporte en outre un calculateur de commande en pression et/ou volume, du fluide délivré, sur commande, par la source à la chambre de poussée.

L'invention a également pour objet un servomoteur caractérisé en ce qu'il comporte
- premier équipage mobile comprenant une pièce susceptible d'être entraînée par l'organe d'actionnement du freinage par le conducteur, typiquement une pédale de frein; un
- un second équipage mobile comprenant un actionneur d'assistance de freinage entraînant un élément d'application d'effort ;
- un capteur de position relative desdits premier et second éléments mobiles connectés à une entrée du calculateur pilotant l'alimentation de la chambre de poussée par la source de pression.

L'invention a également pour objet un servomoteur, caractérisé en ce que la source de pression comporte un maître-cylindre entraîné sur commande par le moteur.

L'invention a également pour objet un servomoteur caractérisé en ce que le maître-cylindre comporte une chambre annulaire.

L'invention a également pour objet un servomoteur caractérisé en ce que la source de pression comporte une pompe entraînée par le moteur.

L'invention a également pour objet un servomoteur caractérisé en ce qu'il comporte des moyens d'isolation hermétique, sur commande, de l'alimentation en fluide sous pression de la chambre de poussée.

L'invention a également pour objet un servomoteur caractérisé en ce qu'il comporte en outre un maître-cylindre comportant des moyens de connexion à des circuits hydrauliques de freinage et une connexion permettant, sur commande, d'injecter du liquide de frein dans une chambre du maître-cylindre comportant des moyens de communication à un circuit hydraulique de freinage.

L'invention a également pour objet un servomoteur caractérisé en ce que la connexion d'alimentation d'une chambre du maître-cylindre, comportant des moyens de connexion à un circuit hydraulique de freinage débouche dans une chambre de réalimentation du maître-cylindre disposé entre deux coupelles appliquées sur le piston de mise en pression de ladite chambre.

L'invention a également pour objet un servomoteur caractérisé en ce que la connexion débouche directement dans une des chambres du maître-cylindre muni de moyens de connexion à un circuit hydraulique de freinage au-delà des coupelles définissant la chambre de réalimentation.

L'invention a également pour objet un servomoteur caractérisé en ce que en ce que la surface active de la chambre de poussée est sensiblement égale à la surface efficace d'au moins une des chambres du maître-cylindre comportant des moyens de connexion à un circuit hydraulique de freinage.

L'invention a également pour objet un servomoteur caractérisé en ce que la surface efficace de la chambre de poussée est inférieure à celle des pistons du maître-cylindre comportant des moyens de connexion à un circuit hydraulique de freinage de manière à éviter le mouvement non désiré de la pédale en cas de freinage actif.
L'invention sera mieux comprise au moyen de la description ci-après et des figures annexées données à titre d'exemple non limitatif parmi lesquelles :
- la figure 1 est une axonométrie avec arrachement partiel d'un premier exemple de réalisation du servomoteur selon la présente invention ;
- la figure 2 est une vue en coupe avec schéma hydraulique d'un deuxième exemple de réalisation d'un servomoteur selon la présente invention ;
- la figure 3 est une vue en coupe avec schéma hydraulique d'un troisième exemple de réalisation d'un servomoteur selon la présente invention ;
- la figure 4 est une vue en coupe avec schéma hydraulique d'un quatrième exemple de réalisation d'un servomoteur selon la présente invention ;
- la figure 5 est une vue en coupe d'un cinquième exemple de réalisation d'un servomoteur selon la présente invention ;
- la figure 6 est une vue en coupe à plus grande échelle d'un dispositif d'alimentation en fluide sous pression du servomoteur de la figure 5 ;
- la figure 7 est une vue schématique en coupe d'un sixième exemple de réalisation d'un servomoteur selon la présente invention.

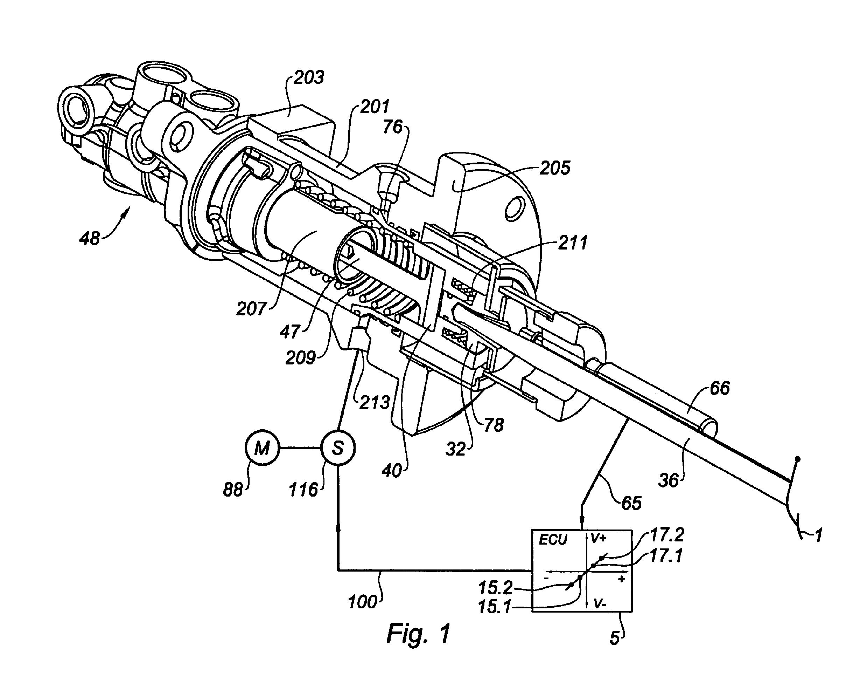

Sur les figures 1 à 7 on a utilisé les mêmes références pour désigner les mêmes éléments.

Sur la figure 1, on peut voir un exemple de réalisation d'un servomoteur selon la présente invention, associé, à l'avant, à un maître-cylindre 48, avantageusement, un maître-cylindre tandem. Avantageusement, le servomoteur comporte un corps 201 sensiblement tubulaire, dont la partie avant 203 reçoit la partie arrière du maître-cylindre 48 avec, par exemple, une fixation par des boulons (non représentés) passant dans des ouvertures ménagées dans des brides ou analogues. Il est avantageux de pouvoir utiliser des maîtres cylindre standard, ou tout au plus légèrement modifiés par rapport aux maîtres cylindre standard, normalement utilisés avec des servomoteurs pneumatiques d'assistance au freinage. La partie arrière 205 comporte une bride de fixation sur le tablier du véhicule. A l'intérieur d'un alésage du corps 201, est disposé un piston hydraulique 78 délimitant avec ledit alésage, une chambre de poussée 76. Avantageusement, le servomoteur selon la présente invention est muni d'un dispositif de réaction, tel qu'un disque de réaction 40 disposé, dans l'exemple illustré, dans un logement du piston 78, logement dont la face arrière forme un épaulement d'appui sur la face arrière du disque 40 et présentant une ouverture centrale de réception d'un plongeur 32. Le rapport des surfaces entre celle de l'épaulement du piston pneumatique et celle de la face avant du plongeur 32 susceptible de prendre appui sur la face arrière du disque 40 détermine le rapport d'assistance du servomoteur. Une distance au repos entre la face avant du plongeur et la face arrière, en vis-à-vis du disque de réaction, mesurée selon l'axe de l'ensemble servomoteur-maître-cylindre, détermine le saut. Une tige de poussée 47 prend appui sur une face avant du disque de réaction 40 et sur l'arrière d'un piston primaire 207 du maître-cylindre. Un ressort de rappel 209, avantageusement hélicoïdal assure le rappel du piston hydraulique 78 vers sa position de repos. De même, un ressort de rappel 211, de plus faible raideur ramène le plongeur 32 vers sa position de repos. Une tige de commande 36 reçoit la poussée d'une pédale de frein 1 qu'elle transmet au plongeur 32.

Une connexion 213 assure l'alimentation en fluide sous pression, avantageusement en liquide de frein sous pression, de la chambre de poussée 76 à partir d'une source de pression 116 munie d'éléments mobiles de pressurisation du fluide entraîné directement ou indirectement par un moteur 88, avantageusement, un moteur électrique. La source 116 comporte avantageusement une pompe, de préférence une pompe à piston de manière encore préférée, comportant un nombre de pistons impair par exemple égal à trois ou cinq. Les moyens de pressurisation peuvent être directement connectés à la chambre 76 ; dans ce cas, l'augmentation de pression dans cette chambre est obtenue par la mise en route des moyens de pressurisation de la source 116. En variante, la source 116 stocke du fluide pressurisé et comporte des moyens d'isolement hermétique, avantageusement au moins une électrovanne, de manière, à délivrer, sur une commande 100 du fluide pressurisé à la chambre de poussée 76. Dans l'exemple avantageux illustré, le servomoteur comporte un capteur 66, avantageusement, un capteur de position, de manière encore préférée, un capteur de position relative d'un premier équipage mobile relié à la pédale de frein 1, par rapport à la position d'un second équipage mobile lié au piston 78 assurant l'assistance au freinage. Il est bien entendu que d'autres capteurs peuvent être mis en oeuvre comme par exemple un capteur de position absolue de la tige de commande 36, une jauge de contrainte de l'effort exercé sur cette tige, un capteur de pression régnant dans les circuits de freinage et/ou au niveau de la source 116, ou autre. Dans l'exemple avantageux illustré, le capteur 66 délivre un signal 65 à un calculateur 5 (ECU ou Electronic Control Unit en terminologie anglo saxonne) qui à son tour délivre un signal de commande 100 à la source de pression 116. Avantageusement, le calculateur 5 comporte un programme de pilotage de la source de pression 116 basée sur les positions relatives des deux équipages mobiles, la position d'équilibre recherchée par les consignes du calculateur 5 pouvant être nulle ou, avantageusement correspondre à un décalage de manière à, comme il est symboliquement représenté sur les figures par des points 15.1, 15.2, 17.1 et 17.2, dynamiquement, sur commande, augmenter ou diminuer le saut lors d'un freinage.

Le servomoteur selon la présente invention prenant une grande sécurité de fonctionnement dans la mesure où en cas de panne de la source 116, seul le ressort de rappel 209 s'oppose au freinage (non assisté) permettant d'arrêter un véhicule défaillant. La force à exercer, notamment dans un tel cas, peut encore être limitée en choisissant un diamètre faible pour au moins un des alésages du maître-cylindre 48.

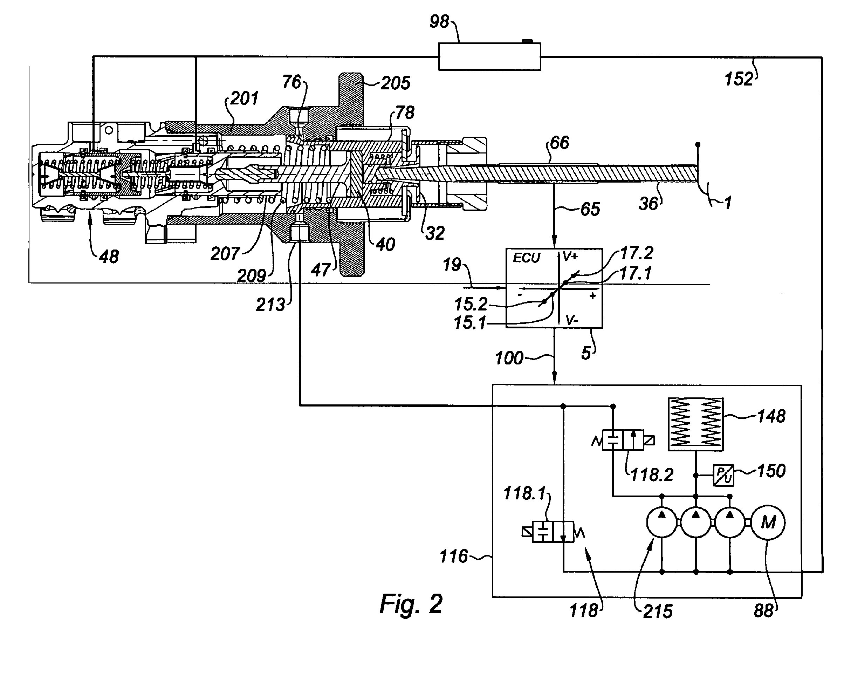

Sur la figure 2, on peut voir un exemple de réalisation d'un servomoteur selon la présente invention pour lequel la source de pression 116 comporte une pompe 215 entraînée par un moteur électrique 88. Avantageusement, la source 116 comporte des moyens 118 d'isolation hermétique, sur commande, avantageusement du calculateur 5, de la connexion 213 d'alimentation de la chambre de poussée 76. Dans l'exemple illustré sur la figure 2, les moyens 118 d'isolation hermétique comportent une première électrovalve 118.1 assurant, sur commande, lors d'un défreinage ou d'une diminution d'un freinage, le retour du liquide de frein vers un réservoir 98 de liquide de frein. Le retour s'effectue par exemple par une canalisation 152 reliant la sortie de l'électrovalve 118.1 ainsi que l'entrée basse pression de la pompe 215 au réservoir 98.

Par ailleurs, le réservoir 98 assure par écoulement gravitationnel, l'alimentation du maître-cylindre 48 en liquide de frein sous la pression atmosphérique.

Avantageusement, les moyens d'isolation hermétique comportent également une électrovalve 118.2, reliant, sur commande, avantageusement du calculateur 5, la sortie haute pression de la pompe 215 à la connexion 213 de la chambre de poussée 76. Bien que la mise en oeuvre de l'électrovalve proportionnelle ne sorte pas du cadre de la présente invention, les électrovalves mises en oeuvre dans les différentes variantes du servomoteur selon la présente invention mettent en oeuvre, avantageusement des électrovalves travaillant en tout ou rien avantageusement pilotées en largeur d'impulsion ((PWM en terminologie anglo-saxonne).

Avantageusement, la source de pression 116, comporte, connectée à la sortie haute pression de la pompe 215, un accumulateur de liquide de frein sous pression 148, permettant, de ne mettre en marche le moteur 88 de la pompe 215 que lorsque cela est nécessaire, par exemple lorsque la pression en sortie de la pompe 215 / de l'accumulateur 148 est inférieure à un seuil bas de pression désiré détecté par exemple par un capteur de pression 150.

Lorsque le conducteur appuie avec son pied sur la pédale 1, d'une part il actionne la tige de commande 36, le plongeur 32, le disque de réaction 40, la tige de poussée 47 et le piston primaire 207 du maître-cylindre. L'augmentation de pression dans la chambre primaire assure le déplacement du piston secondaire du maître-cylindre 48. Par ailleurs, la consigne de freinage est détectée par un capteur, par exemple le capteur 66 qui envoie un signal au calculateur 5 qui assure l'alimentation en fluide sous pression, à partir de la source 216 de la chambre de poussée 76, assurant simultanément une assistance au freinage. Par ailleurs, le calculateur 5 peut recevoir par une liaison 19 des informations complémentaires provenant d'autres capteurs et/ou calculateurs du véhicule. Par exemple, il peut recevoir une commande de freinage automatique sans appui par le conducteur sur la pédale 1. Ce freinage s'effectue également par l'alimentation en fluide sous pression par l'intermédiaire de la connexion 213 de la chambre 76. Il est à noter que dans l'exemple illustré sur la figure 2, la pédale de frein 1 s'enfonce lors des freinages automatiques.

Avantageusement, au moins certains des dispositifs de la source 116 sont utilisés pour assurer la modulation de freinage et notamment l'antiblocage des roues (ABS), le contrôle d'adhérence (ASR), le contrôle de trajectoire (ESP) ou autre. La mise en oeuvre de la pompe 215, du moteur 88 du capteur 150, et, éventuellement de l'accumulateur 148 et des moyens d'isolation hermétique 118 communs permet de diminuer le prix de revient du système de freinage du véhicule et/ou d'offrir des fonctions supplémentaires avec une augmentation des coûts modérée.

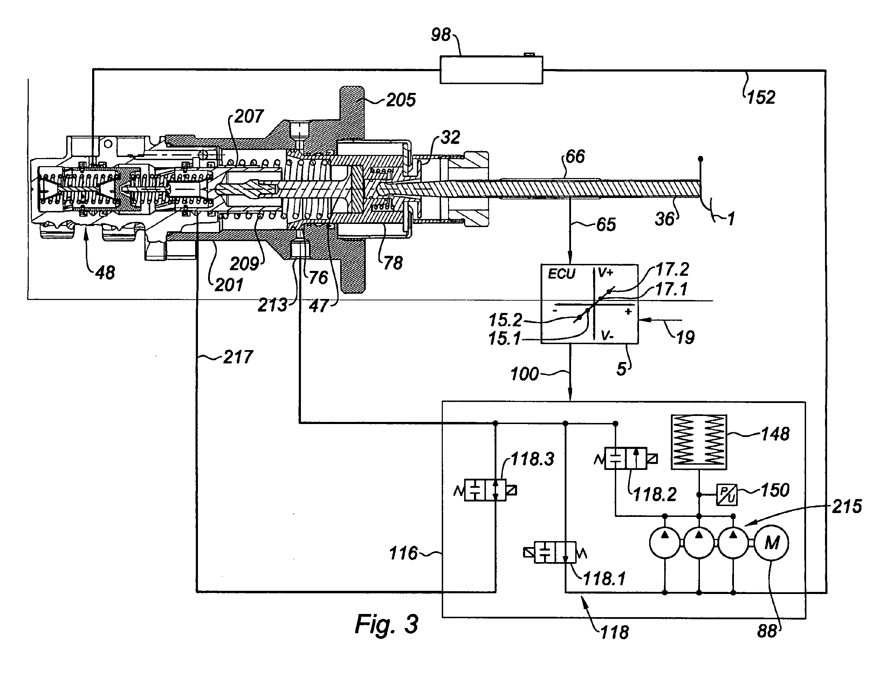

Sur la figure 3, on peut voir une variante de réalisation du servomoteur de la figure 2 dans lequel les moyens 118 d'isolation hermétique de la source 116 comportent en outre une troisième électrovanne 118.3, reliant, sur commande du calculateur 5, la sortie haute pression de la pompe 215, de l'accumulateur 148 et/ou de l'électrovanne 118.2 à une des chambres du maître-cylindre 48, par exemple, comme illustré à la chambre primaire dudit maître-cylindre 48. Dans une première variante de réalisation, une conduite 217 d'alimentation, sur commande, de la chambre primaire du maître-cylindre débouche dans une chambre de réalimentation du maître-cylindre disposé entre deux coupelles appliquées sur le piston primaire 207. Dans un tel cas, une fuite au niveau des vannes 118.3 et 118.1 ne compromet pas la sécurité de freinage dans la mesure où les coupelles s'opposent à une diminution de pression dans la chambre du maître-cylindre. Toutefois, dans un tel cas, il faut assurer l'isolation hermétique de la chambre de réalimentation par rapport au réservoir 98 de manière à éviter d'introduire du liquide de frein sous pression dans ce réservoir. Dans une première variante, non illustrée, on dispose d'une électrovanne supplémentaire disposée sur la connexion d'alimentation de la chambre du maître-cylindre et le réservoir 98). Dans l'exemple avantageux illustré, on supprime tout simplement la liaison directe entre le réservoir 98 et la chambre de réalimentation /chambre primaire du maître-cylindre 48. En effet, les réalimentations et les retours au réservoir 98 du liquide de frein s'effectuent par la canalisation 217, l'électrovanne 118.3, l'électrovanne 118.1 et la canalisation 152.

L'ouverture de la valve 118.3, sur commande 100 du calculateur 5 assure le préremplissage et/ou le remplissage de la chambre primaire du maître cylindre 48 permettant le fonctionnement des modes actifs, c'est-à-dire sans nécessiter l'appui sur la pédale 1 du système de freinage, par exemple pour un freinage automatique sur commande d'un radar (ACC), un freinage de parking ou autre.

L'augmentation de la pression dans la chambre primaire du maître cylindre 48 pousse le piston secondaire qui à son tour assure la montée en pression dans le circuit secondaire.

Avantageusement, la surface efficace de la chambre de poussée 76 est adaptée à la surface efficace du piston primaire et/ou secondaire du maître cylindre 48.

Par exemple, on augmente la surface efficace de la chambre de poussée 76 par rapport à celle des chambres du maître-cylindre si on veut compenser une pression faible (par exemple limitée à 10⁷ Pa) de la source de liquide de frein sous pression. Toutefois, un tel rapport de surfaces risque d'induire un mouvement de la pédale de frein 1 lors de modes actifs.

Pour lesdites surfaces égales, la pression de saturation, c'est-à-dire la pression maximale fournie par la source haute pression est égale à la pression générée par l'assistance en sortie du maître-cylindre. La pédale 1 reste immobile pendant les modes actifs.

Pour des surfaces efficaces de la chambre de poussée 76 inférieures à celles des pistons du maître-cylindre on diminue le volume de fluide à fournir à la chambre 76 pour un freinage donné, ce qui permet de limiter le débit de la pompe, de diminuer le volume de l'accumulateur et/ou d'améliorer la dynamique du freinage c'est-à-dire de diminuer le temps de réponse du système de freinage.

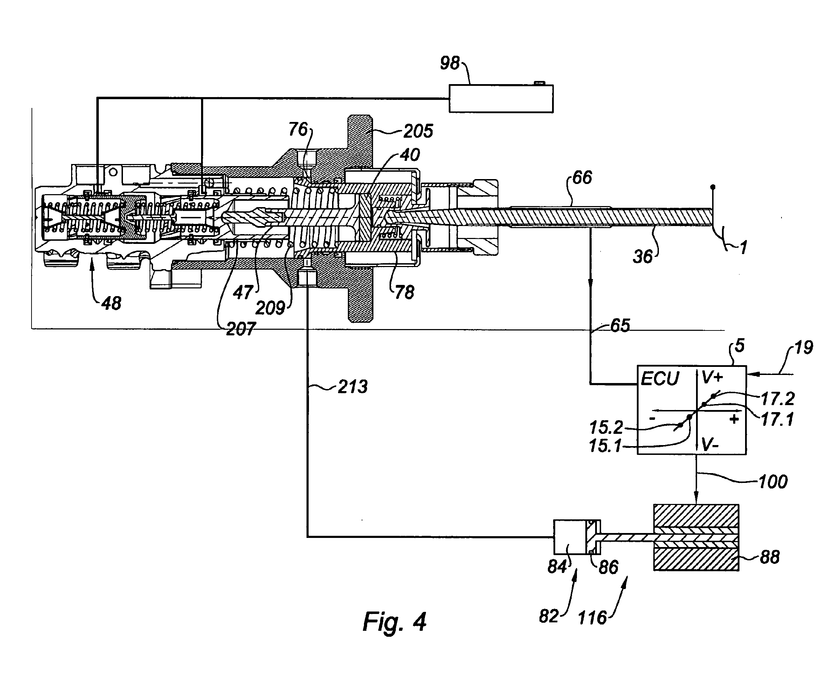

Sur la figure 4, on peut voir un exemple de réalisation du servomoteur selon la présente invention dans laquelle la source 116 d'alimentation de la chambre de poussée 76 comporte un maître-cylindre 84, muni d'un piston 86 entraîné en translation par un moteur électrique 8 muni de moyens d'entraînement en translation du piston 86. Par exemple, le moteur 8 est un moteur rotatif commandé par lesdits moyens d'entraînement en translation du piston 86 comporte une vis, avantageusement, une vis à billes.

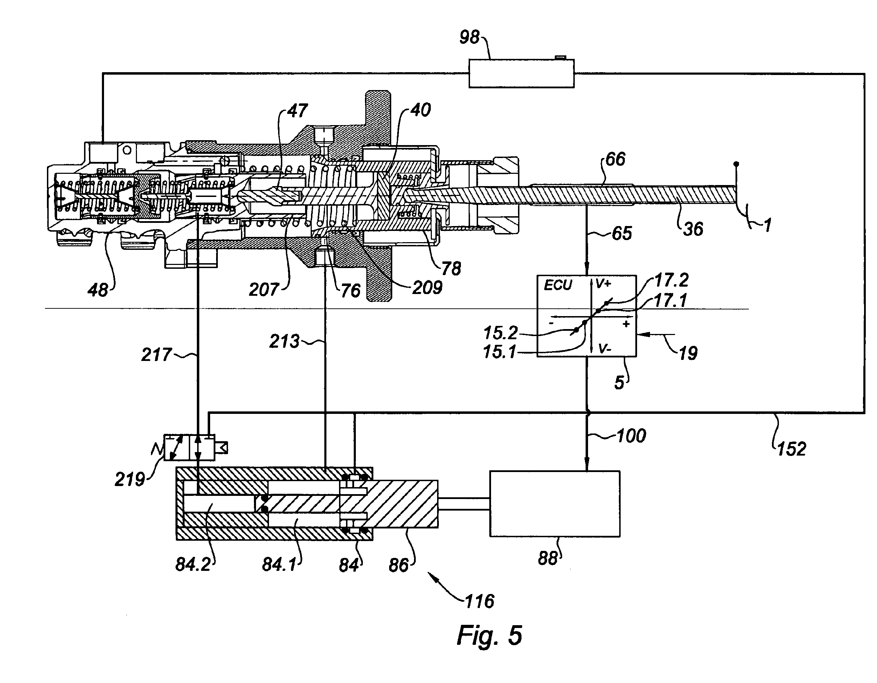

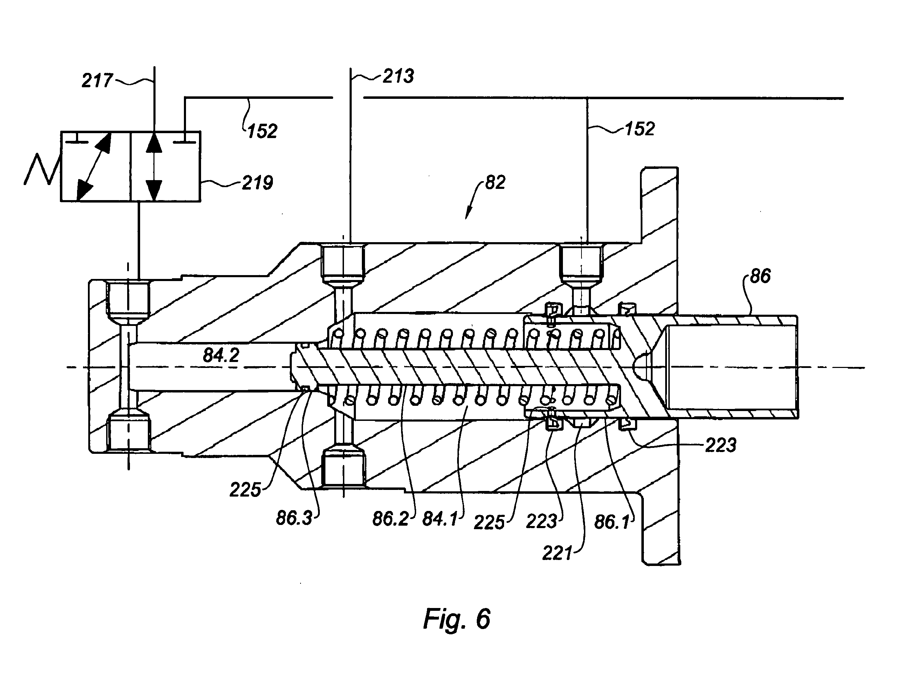

Sur la figure 5, on peut voir un exemple avantageux d'un servomoteur selon la présente invention dont la chambre de poussée 76 est alimentée par un maître-cylindre 84 motorisé. Dans l'exemple avantageux, le maître-cylindre 84 est un maître-cylindre tandem, illustré plus en détail sur la figure 6 dont la chambre primaire 84.1 alimente la connexion 213 de la chambre de poussée 76 et dont une chambre secondaire 84.2 alimente par une connexion 217 la chambre primaire du maître-cylindre 48. Il est à noter que dans un tel cas, l'alimentation s'effectue de manière préférée, directement dans la chambre du maître-cylindre et non pas dans la chambre de réalimentation de celui-ci. Avantageusement, comme illustré, seule la chambre secondaire du maître-cylindre 48 est alimentée, gravitationnellement, par le réservoir 98 de liquide de frein sous pression atmosphérique. Avantageusement, une électrovanne deux voies 219, relie, sur commande, lors d'un freinage, la chambre secondaire 84.2 du maître-cylindre 84 à la chambre primaire du maître-cylindre 48 d'alimentation de circuit de freinage. Dans cette position, la valve 219 assure simultanément l'isolation hermétique de la canalisation 217 de l'alimentation de la chambre primaire du réservoir 48 par rapport à la canalisation 152 reliée au réservoir 98.

Dans une seconde position, hors freinage, la vanne 219 isole la canalisation 217 par rapport à la chambre secondaire 84.2 du maître-cylindre 84 (et par rapport à la canalisation 152 reliée au réservoir 98) et connecte la canalisation 152 à la chambre secondaire 84.2 du maître-cylindre 84. Avantageusement, la connexion 152 est connectée, par ailleurs, de manière permanente à une chambre 221 de réalimentation de la chambre primaire 84.1 du maître-cylindre 84. Ladite chambre 221 de réalimentation est délimitée dans un alésage du maître-cylindre 84 par deux coupelles 223 appliquées sur la partie primaire du piston 86. Ledit piston 86 comporte des trous de réalimentation 225 avantageusement disposés régulièrement radialement de manière à mettre en communication, au repos, c'est-à-dire lorsque le piston 86 est reculé au maximum, (vers la droite de la figure 6), la chambre primaire 84.1 du maître-cylindre 84 avec la canalisation 152 reliée au réservoir 98. L'avancée du piston 86 déplace les trous de réalimentation 125 qui passent au-delà de la coupelle 123 avant qui assure à ce moment là l'isolation de la canalisation 152 par rapport à la chambre primaire 84.1.

L'électrovanne 119 non activée, l'actionnement de la pédale de frein provoque selon la consigne du dispositif de pilotage un déplacement de fluide hydraulique de la chambre primaire du maître-cylindre 84 vers la chambre de travail 76. Simultanément, le volume balayé par la chambre secondaire de ce même maître-cylindre sera transféré au réservoir sans montée en pression à travers l'électrovanne 219 et la canalisation 152. Ce dernier déplacement de fluide sera donc sans influence sur la caractéristique de freinage. La relation entre la course d'entrée à la tige de commande 36 et la pression des chambres primaires et secondaires du maître-cylindre 48 sera donc fonction des sections respectives des chambres de ce dernier maître-cylindre, et de celles des récepteurs de freinage du véhicule (freins), comme pour les systèmes de freinage classiques dits « non découplés ».

L'électrovanne 119 activée, de part la séparation totale des deux chambres du maître-cylindre 84, l'actionnement de la pédale de frein provoque selon la consigne du dispositif de pilotage un déplacement simultané de fluide hydraulique de la chambre primaire du maître-cylindre 84 vers la chambre de travail 76, et de la chambre secondaire de ce dernier maître-cylindre vers la chambre primaire du maître-cylindre 48. La valeur de ce dernier volume de fluide sera fonction de la section de la chambre secondaire du maître-cylindre 84. Ce volume additionnel par rapport à la situation de freinage décrite dans le paragraphe précédent participe au remplissage des circuits de freinage primaire et secondaire du véhicule. Il en résulte que la course d'entrée à la tige de commande 36 nécessaire pour atteindre une pression de circuit de freinage donnée sera raccourcie d'une valeur proportionnelle à la section de la chambre secondaire du maître-cylindre 84. Il est ainsi possible avec un système de freinage dit non découplé et qui offre donc des avantages en terme de robustesse et de sensation pédale par rapport à un système dit « découplé » avec simulateur, d'obtenir une caractéristique de freinage course d'entrée/pression circuit plus courte, tout en conservant un maître-cylindre 48 dimensionné de manière classique afin d'atteindre les performances de freinage de secours (en cas de panne de l'assistance au freinage) requises par la législation.

A l'inverse, un véhicule qui repose sur un système électronique du type HBC, c'est-à-dire avec génération de pression par le groupe hydraulique du dispositif ESP pour compenser une éventuelle défaillance de l'assistance au freinage pour répondre à la législation de manière à pouvoir garder une course pédale acceptable en mode de freinage normal, peut bénéficier de l'invention pour gagner en robustesse. Ainsi, par exemple, une panne de courant électrique totale du véhicule sera sans influence sur les performances de freinage de secours, contrairement au cas où le véhicule repose sur la fonction électronique pour atteindre la distance d'arrêt requise par la législation.

Par ailleurs, ce dispositif peut être exploité en tant que fonction permettant au conducteur de choisir entre deux comportements du système de freinage. Le choix s'effectue par une interface utilisateur, par exemple, en appuyant sur une touche de commande ou en choisissant dans un menu de configuration du véhicule. Par exemple un mode 'normal' pour lequel l'électrovanne 119 serait en position non activée, et un mode 'sport' pour lequel l'électrovanne 119 serait activée, offrant ainsi au conducteur une pédale plus courte et mieux adaptée à une conduite sportive.

Avantageusement, les alésages des chambres primaires 84.1 et secondaires 84.2 du maître-cylindre 84 ont des diamètres différents. De préférence, le diamètre de la chambre secondaire 84.2 est inférieur au diamètre de la chambre primaire 84.1. Ainsi, le raccourcissement de la pédale obtenu lorsque l'électrovanne 119 est activée n'est pas excessif, et ne se traduira pas par une caractéristique de freinage trop agressive, risquant de déplaire au conducteur.

Avantageusement, un piston unique 86 entre deux pistons liés mécaniquement en translation selon l'axe du maitre-cylindre 84 assure la mise en pression du liquide de frein présent dans les chambres 84.1 et 84.2. Dans l'exemple avantageux illustré, le piston 86 unique comporte une zone tubulaire 86.1 arrière sur laquelle s'appliquent les coupelles 223 prolongées vers l'avant jusqu'à la chambre 84.2 par une tige 86.2 coaxiale terminée par un disque 86.3 formant piston secondaire muni d'une gorge de réception d'un joint 225 par exemple torique.

Le piston 86 permet d'alimenter la chambre du maître-cylindre 48 ainsi que la chambre de poussée 76 mais également la longueur et les diamètres des pistons permettent de sélectionner les volumes à injecter.

Par ailleurs, en mode de freinage normal, c'est-à-dire résultant du fait que le conducteur appuie son pied sur la pédale 1, il est possible, selon l'invention, en injectant un volume de liquide dans la chambre primaire et/ou secondaire du maître-cylindre 48 de raccourcir la course pédale obtenue, ce raccourcissement de course pédale en fonctionnement normal permet de sélectionner un maître-cylindre de diamètre faible qui, en absence du dispositif selon la présente invention, résulterait en une course pédale trop longue pour être acceptée par l'utilisateur. Toutefois, la diminution du diamètre du maître-cylindre est masquée par l'injection de liquide de frein dans la chambre primaire et/ou secondaire du maître-cylindre 48. On peut par exemple utiliser des maîtres-cylindre 48 ayant un diamètre compris entre 2 mm et 50 mm de préférence entre 10 mm et 40 mm de manière encore préférée entre 19,6 mm et 33 mm par exemple égale à 22,2 mm, 23,8 mm ou 25,4 mm.

La diminution du diamètre de maître-cylindre avec la même course de la pédale, ou même une course de pédale diminuée de manière à augmenter le confort du conducteur en freinage normal, permet, en outre d'augmenter la pression dans les freins, pour une force d'application sur la pédale 1 donnée en cas de défaillance de la source de pression 116. Il est à noter que en cas d'une telle défaillance, avec un maître cylindre de diamètre réduit, se solde par une augmentation de la course pédale en défaillance (qui ne peut plus être masquée en absence d'injection de liquide de frein dans la chambre primaire et/ou secondaire du maître-cylindre 48). Toutefois, cette augmentation de course à la pédale sera tout à fait acceptable dans la mesure où elle est exceptionnelle (uniquement en cas de défaillance de la source de pression 116) et où elle améliore l'efficacité du freinage particulièrement pour les conducteurs incapables d'exercer une force trop grande sur la pédale de frein, notamment pour les personnes âgées et certaines femmes).

De même, la présente invention est particulièrement intéressante pour des véhicules hybrides comportant un moteur thermique et un moteur électrique susceptibles de fonctionner en générateur rechargeant les batteries lors des freinages. En effet, le freinage régénératif par le moteur électrique fonctionnant en générateur doit être complété de manière à obtenir le freinage désiré. Ainsi, un freinage actif peut correspondre à ce complément de freinage tout en permettant une sensation pédale normale. La tige de commande 36 et la tige de poussée 47 étant découplées par une injection de liquide de frein dans la chambre de poussée 76.

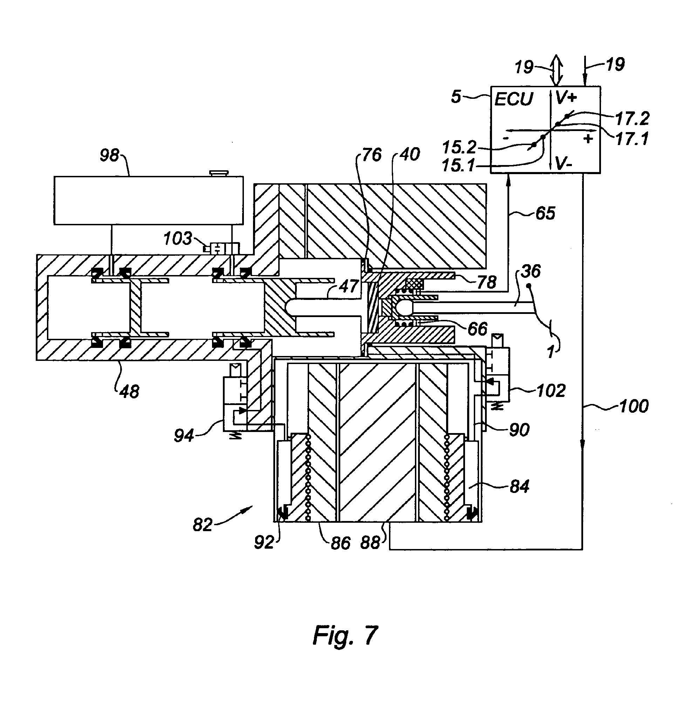

Dans l'exemple illustré, sur la figure 7, la source de pression 116 d'alimentation de la chambre de poussée 76 comportent un maître cylindre 82 comportant une chambre 84 à volume variable dans laquelle la pression du liquide de frein est augmentée par un piston 86 entraîné, sur commande 100 par un moteur 88, avantageusement un moteur électrique.

Dans l'exemple illustré, sur la figure 4, la chambre 84 est une chambre annulaire reliée par une canalisation 90 à la chambre de poussée 76. Avantageusement, le moteur est un moteur pas à pas et entraîne le piston 86 par l'intermédiaire d'une vis à billes.

Dans l'exemple avantageux illustré, le piston 86 comporte à au moins une de ses extrémités axiales, un joint hydraulique susceptible de supporter les pressions de commande de préférence comme illustré, un joint de type coupelle.

Avantageusement, le servomoteur selon la présente invention comporte en outre, une électrovalve 94 fermée au repos assurant la fermeture hermétique, sur commande, d'une canalisation 96 reliant la chambre 84 au maître cylindre 48. Dans l'exemple avantageux illustré, la canalisation 96 débouche du côté du maître cylindre 48 entre deux coupelles délimitant, de manière connue, une chambre de réalimentation du maître cylindre. Cette chambre est d'autre part reliée à un réservoir 98 de liquide de frein. En outre, au repos, la chambre de réalimentation est reliée par des ouvertures pratiquées dans le piston primaire à la chambre primaire du maître cylindre 48. Au contraire, lorsque le piston primaire avance, les ouvertures passent au-delà de la coupelle antérieure permettant la montée en pression du circuit de freinage. L'électrovalve 94 permet en cas de panne du moteur 88 en cours de freinage de relâcher la pression de la chambre 84 dans le réservoir 98 et ainsi d'éviter dans l'éventualité d'une panne du moteur 88, un freinage non désiré. De même, il est à noter qu'en absence d'assistance suite à une panne du moteur 88, une poussée sur la tige de commande entraîne directement la tige de poussée 47 sans avoir à entraîner le moteur 88.

Avantageusement, le servomoteur selon la présente invention, comporte une seconde électrovalve 102 isolant, sur commande la chambre de poussée 76 de la chambre 84 du maître cylindre 82. Ainsi, il est possible de maintenir une pression hydraulique de freinage constante indépendamment de l'action du moteur. Cela peut être utile, par exemple pour des pressions constantes sur la pédale de frein, par exemple lors d'un arrêt à un feu rouge, d'un arrêt prolongé ou d'une descente sur une route en pente avec freinage constant. Ainsi, il n'est pas utile dans un tel cas d'actionner le moteur 88. On diminue ainsi la consommation électrique ainsi que l'usure du moteur. La seconde électrovalve 102 est particulièrement utile dans le cas de mise en oeuvre de vis réversibles, c'est-à-dire des vis susceptibles d'être entraînées en rotation par une variation de pression dans la chambre moteur 76.

Avantageusement, le servomoteur selon la présente invention comporte en outre une troisième électrovalve 103 isolant, sur commande, la chambre primaire du maître cylindre 48 du réservoir de liquide de frein 98. Il est ainsi possible d'assurer le préremplissage du circuit de freinage à travers le maître cylindre en ouvrant l'électrovalve 94 en fermant la valve 103 de manière à éviter que la pression fournie à la chambre primaire s'échappe vers le réservoir. Il est à noter que le préremplissage des freins s'effectue sans avancement de la tige de commande 36, par suite de la pédale de frein 1. De même, la combinaison des électrovalves 94 ouverte et électrovalve 103 fermée, permet de mettre en oeuvre des modes de freinage actifs c'est-à-dire sur commande du calculateur 5, sans nécessité de l'action du conducteur et, sans déplacement de la pédale 1. Il est à noter que le piston secondaire transmet à la chambre secondaire la pression régnant dans la chambre primaire, notamment lors des freinages actifs.

Le préremplissage de frein peut être très utile pour diminuer les distances de freinage et/ou pour permettre la mise en oeuvre de frein hydraulique à recul de piston augmenté qui présente un couple de freinage résiduel (non désiré) nul et/ou tout au moins réduit.

En outre l'électrovalve 103 ou tout autre moyen d'isolation hermétique, sur commande, peut être actionnée pour isoler au moins une des chambres du maître cylindre 48, typiquement la chambre primaire de manière à, par exemple, réduire la course morte au moment de l'actionnement des freins, et de préférence avant que les trous de réalimentation du piston primaire aient dépassé la coupelle avant de la chambre primaire du maître cylindre ou, si une température anormalement élevée a été détectée lors d'un freinage risquant d'entraîner en cas de relâchement du freinage, l'ébullition du liquide de frein. Toutefois, lors du défreinage complet, c'est-à-dire sans appui sur la pédale de frein, éventuellement après une temporisation, l'électrovalve 103 est réouverte de manière à éviter un freinage non désiré.

L'invention s'applique notamment à l'industrie automobile.

L'invention s'applique principalement à l'industrie du freinage.

## Revendications

1. Servomoteur hydraulique d'assistance de freinage comportant une chambre de poussée (76) recevant, sur commande un fluide hydraulique sous pression entraînant un piston hydraulique (78) entraînant un piston d'un maître-cylindre **caractérisé en ce qu'**il comporte une source de liquide hydraulique sous pression (116) muni d'un moteur électrique (88) entraînant un dispositif de pressurisation du fluide hydraulique et **en ce qu'**il comporte en outre un calculateur (5) de commande en pression et/ou volume, du fluide délivré, sur commande, par la source (116) à la chambre de poussée (76).

2. Servomoteur selon la revendication 1 **caractérisé en ce qu'**il comporte
- un premier équipage mobile comprenant une pièce (32) susceptible d'être entraînée par l'organe d'actionnement du freinage par le conducteur, typiquement une pédale de frein (1) ;
- un second équipage mobile comprenant un actionneur (116, 76) d'assistance de freinage entraînant un élément d'application d'effort (78) ;
- un capteur (66) de position relative desdits premier et second éléments mobiles connectés à une entrée du calculateur (5) pilotant l'alimentation de la chambre de poussée (76) par la source de pression (116).

3. Servomoteur selon l'une quelconque des revendications précédentes, **caractérisé en ce que** la source (116) de pression comporte un maître-cylindre (82) entraîné sur commande par le moteur (88).

4. Servomoteur selon la revendication 3 **caractérisé en ce que** le maître-cylindre (82) comporte une chambre (84) annulaire.

5. Servomoteur selon la revendication 1 ou 2 **caractérisé en ce que** la source de pression (116) comporte une pompe (215) entraînée par le moteur (88).

6. Servomoteur selon l'une quelconque des revendications précédentes **caractérisé en ce qu'**il comporte des moyens (118) d'isolation hermétique, sur commande, de l'alimentation en fluide sous pression de la chambre de poussée (76).

7. Servomoteur selon l'une des revendications précédentes **caractérisé en ce qu'**il comporte en outre un maître-cylindre (48) comportant des moyens de connexion à des circuits hydrauliques de freinage et une connexion (217) permettant, sur commande, d'injecter du liquide de frein dans une chambre du maître-cylindre (48) comportant des moyens de communication à un circuit hydraulique de freinage.

8. Servomoteur selon la revendication 7 **caractérisé en ce que** la connexion (217) d'alimentation d'une chambre du maître-cylindre (48), comportant des moyens de connexion à un circuit hydraulique de freinage débouche dans une chambre de réalimentation du maître-cylindre disposé entre deux coupelles appliquées sur le piston de mise en pression de ladite chambre.

9. Servomoteur selon la revendication 7 **caractérisé en ce que** la connexion (217) débouche directement dans une des chambres du maître-cylindre (48) muni de moyens de connexion à un circuit hydraulique de freinage au-delà des coupelles définissant la chambre de réalimentation.

10. Servomoteur selon l'une quelconque des revendications précédentes **caractérisé en ce que en ce que** la surface active de la chambre de poussée (76) est sensiblement égale à la surface efficace d'au moins une des chambres du maître-cylindre (48) comportant des moyens de connexion à un circuit hydraulique de freinage.

11. Servomoteur selon l'une quelconque des revendications 1 à 9 **caractérisé en ce que** la surface efficace de la chambre de poussée (76) est inférieure à celle des pistons du maître-cylindre (48) comportant des moyens de connexion à un circuit hydraulique de freinage de manière à éviter le mouvement non désiré de la pédale (1) en cas de freinage actif.

## Claims

1. Hydraulic brake booster comprising a thrust chamber (76) receiving, on command, a pressurized hydraulic fluid that drives a hydraulic piston (78) that drives a piston of a master cylinder, **characterized in that** it comprises a source of pressurized hydraulic liquid (116) provided with an electric motor (88) driving a hydraulic fluid pressuring device and **in that** it further comprises a control unit (5) for controlling the pressure and/or volume of the fluid delivered, on command, by the source (116) to the thrust chamber (76).

2. Booster according to Claim 1, **characterized in that** it comprises:
- a first set of moving gear comprising a component (32) able to be driven by the member via which the driver actuates braking, typically a brake pedal (1);
- a second set of moving gear comprising a brake boosting actuator (116, 76) driving a force application element (78);
- a position sensor (66) that senses the relative position of said first and second moving elements which are connected to one input of the control unit (5) controlling the supply to the thrust chamber (76) via the pressure source (116).

3. Booster according to either one of the preceding claims, **characterized in that** the pressure source (116) comprises a master cylinder (82) driven on command by the motor (88).

4. Booster according to Claim 3, **characterized in that** the master cylinder (82) comprises an annular chamber (84).

5. Booster according to Claim 1 or 2, **characterized in that** the pressure source (116) comprises a pump (215) driven by the motor (88).

6. Booster according to any one of the preceding claims, **characterized in that** it comprises means (118) of hermetically isolating, on command, the supply of pressurized fluid to the thrust chamber (76).

7. Booster according to one of the preceding claims, **characterized in that** it further comprises a master cylinder (48) comprising means of connection to hydraulic braking circuits and a connection (217) which, on command, allows brake fluid to be injected into a chamber of the master cylinder (48) comprising means of communication with a hydraulic braking circuit.

8. Booster according to Claim 7, **characterized in that** the connection (217) for supplying a chamber of the master cylinder (48), comprising means of connection to a hydraulic braking circuit, opens into a resupply chamber of the master cylinder positioned between two cups pressed against the piston for the pressuring of said chamber.

9. Booster according to Claim 7, **characterized in that** the connection (217) opens directly into one of the chambers of the master cylinder (48) provided with means of connection to a hydraulic braking circuit beyond the cups defining the resupply chamber.

10. Booster according to any one of the preceding claims, **characterized in that** the active surface area of the thrust chamber (76) is substantially equal to the effective surface area of at least one of the chambers of the master cylinder (48) comprising means of connection to a hydraulic braking circuit.

11. Booster according to any one of Claims 1 to 9, **characterized in that** the effective surface area of the thrust chamber (76) is smaller than that of the pistons of the master cylinder (48) comprising means of connection to a hydraulic braking circuit so as to avoid undesired movement of the pedal (1) in the event of active braking.

## Patentansprüche

1. Hydraulischer Bremskraftverstärker, umfassend eine Schubkammer (76), die auf Anforderung ein druckbeaufschlagtes Hydraulikfluid erhält, das einen hydraulischen Kolben (78) antreibt, der einen Kolben eines Hauptzylinders antreibt, **dadurch gekennzeichnet, dass** er eine mit einem Elektromotor (88) versehene Quelle (116) druckbeaufschlagten Hydraulikfluids umfasst, die eine Vorrichtung zur Druckbeaufschlagung des Hydraulikfluids antreibt, und dass er ferner eine Steuereinheit (5) zum Steuern des Drucks und/oder des Volumens des der Schubkammer (76) von der Quelle (116) auf Anforderung zugeführten Fluids umfasst.

2. Kraftverstärker nach Anspruch 1, **dadurch gekennzeichnet, dass** er Folgendes umfasst:
- eine erste bewegliche Anordnung, umfassend ein Teil (32), das durch den Fahrer über das Bremsbetätigungsglied, typischerweise ein Bremspedal (1), angetrieben werden kann;
- eine zweite bewegliche Anordnung, umfassend einem Bremskraftverstärkungsaktuator (116, 76), der ein Kraftanlegungselement (78) antreibt;
- einen Positionssensor (66) für die ersten und zweiten beweglichen Elemente, die mit einem Eingang der Steuereinheit (5) verbunden sind, die die Versorgung der Schubkammer (76) durch die Druckquelle (116) steuert.

3. Kraftverstärker nach einem der vorhergehenden Ansprüche, **dadurch gekennzeichnet, dass** die Druckquelle (116) einen auf Anforderung durch den Motor (88) angetriebenen Hauptzylinder (82) umfasst.

4. Kraftverstärker nach Anspruch 3, **dadurch gekennzeichnet, dass** der Hauptzylinder (82) eine ringförmige Kammer (84) umfasst.

5. Kraftverstärker nach Anspruch 1 oder 2, **dadurch gekennzeichnet, dass** die Druckquelle (116) eine durch den Motor (88) angetriebene Pumpe (215) umfasst.

6. Kraftverstärker nach einem der vorhergehenden Ansprüche, **dadurch gekennzeichnet, dass** er Mittel (118) zur hermetischen Isolierung der Schubkammer (76) Druckfluidversorgung auf Anforderung umfasst.

7. Kraftverstärker nach einem der vorhergehenden Ansprüche, **dadurch gekennzeichnet, dass** er ferner einen Hauptzylinder (48) umfasst, der Mittel zur Verbindung mit hydraulischen Bremskreisen und eine Verbindung (217) umfasst, die auf Anforderung das Einspritzen der Bremsflüssigkeit in eine Kammer des Hauptzylinders (48), der Mittel zur Kommunikation mit einem hydraulischen Bremskreis umfasst, ermöglicht.

8. Kraftverstärker nach Anspruch 7, **dadurch gekennzeichnet, dass** die Verbindung (217) zur Versorgung einer Kammer des Hauptzylinders (48), der Mittel zur Verbindung mit einem hydraulischen Bremskreis umfasst, in einer Nachversorgungskammer, des Hauptzylinders mündet, die zwischen zwei Manschetten angeordnet ist, die zur Druckbeaufschlagung der Kammer am Kolben anliegen.

9. Kraftverstärker nach Anspruch 7, **dadurch gekennzeichnet, dass** die Verbindung (217) direkt in einer der Kammern des Hauptzylinders (48), der mit Mitteln zur Verbindung mit einem hydraulischen Bremskreis versehen ist, jenseits der die Nachversorgungskammer definierenden Manschetten mündet.

10. Kraftverstärker nach einem der vorhergehenden Ansprüche, **dadurch gekennzeichnet, dass** die Wirkfläche der Schubkammer (76) im Wesentlichen gleich der effektiven Fläche mindestens einer der Kammern des Hauptzylinders (48), der Mittel zur Verbindung mit einem hydraulischen Bremskreis umfasst, ist.

11. Kraftverstärker nach einem der Ansprüche 1 bis 9, **dadurch gekennzeichnet, dass** die effektive Fläche der Schubkammer (76) kleiner als die der Kolben des Hauptzylinders (48), der Mittel zur Verbindung mit einem hydraulischen Bremskreis umfasst, ist, um eine unerwünschte Bewegung des Pedals (1) bei aktiver Bremsung zu vermeiden.
